# EUROPEAN PATENT APPLICATION

(11) **EP 2 199 991 A1**
(43) Date of publication of application: **23.06.2010**
(21) Application number: 09178316.7
(22) Date of filing: 08.12.2009
(51) Int. Cl.: G07F 7/00

(54) **Systems and methods for charging an electric vehicle within a parking area**

(30) Priority: 22.12.2008 US 341781
(71) Applicant: General Electric Company, Schenectady, NY 12345 (US)
(72) Inventor: Littrell, Nathan Bowman, Gardnerville, NV 89410 (US)
(74) Representative: Gray, Thomas

(57) **Abstract**

A system configured to deliver energy to an electric vehicle (110) is provided. The system includes an energy delivery point (104) located within a parking area that includes a plurality of parking spaces, wherein the energy delivery point is configured to be coupled to the electric vehicle and to deliver energy to the electric vehicle, and a server system (102) coupled to the energy delivery point, wherein the server system is configured to permit access by the electric vehicle to the parking area, and determine a transaction cost that includes a parking cost and an energy cost.

## Description

### BACKGROUND OF THE INVENTION

The subject matter disclosed herein relates generally to delivering energy to an electric vehicle and, more particularly, to metering energy delivered to an electric vehicle in a parking area, such as a garage.

As electric vehicles and/or hybrid electric vehicles gain popularity, an associated need to accurately manage delivery of electrical energy to them has increased. Moreover, a need to recognize revenue owed to the utility that provides the energy has been created by the increased use of such vehicles.

At least some known parking control systems monitor a parking garage gate over a network. Such systems permit access to the parking garage by, for example, lifting the gate upon recognition of an identifier. For example, such systems may permit access to the garage based on the recognition of an identifier, such as an access card carried within a vehicle, a license plate of the vehicle, a finger print of a driver, and/or a voice pattern of the driver. A terminal reads the identifier from the access card and/or license plate, and/or obtains the finger print and/or voice pattern of the user, and communicates with a remote server. The server evaluates the identifier, and determines whether to permit access to the parking garage. However, such parking control systems do not enable delivery of energy to an electric vehicle after access has been permitted.

Moreover, at least some known parking systems provide data management services for managing revenue associated with one or more parking locations. Such systems receive revenue data for each parking location and store the data in a centralized database. An interface enables a user to view and/or manipulate the revenue data for each parking location or groups of parking locations over a network. Some such systems enable setup of differential pricing structures according to, for example, a location of the parking locations. However, generally such systems do not enable delivery of energy to an electric vehicle after access has been permitted.

Accordingly, it is desirable to provide systems and methods for delivering energy to an electric vehicle while parked within a parking garage, metering an amount of energy delivered to the electric vehicle, and adjusting an account according to a transaction amount that is based on the amount of energy delivered to the electric vehicle and/or a parking cost.

### BRIEF DESCRIPTION OF THE INVENTION

This Brief Description is provided to introduce a selection of concepts in a simplified form that are further described below in the Detailed Description. This Brief Description is not intended to identify key features or essential features of the claimed subject matter, nor is it intended to be used as an aid in determining the scope of the claimed subject matter.

In one aspect, a method is provided for delivering energy to an electric vehicle. The method includes permitting access to a parking area that includes an energy delivery point, delivering energy to the electric vehicle from the energy delivery point, and determining a transaction cost.

In another aspect, a system configured to deliver energy to an electric vehicle is provided. The system includes an energy delivery point located within a parking area that includes a plurality of parking spaces, and a server system coupled to the energy delivery point. The energy delivery point is configured to be coupled to the electric vehicle and to deliver energy to the electric vehicle. The server system is configured to permit access by the electric vehicle to the parking area, and determine a transaction cost that includes a parking cost and an energy cost.

In another aspect, a parking controller is provided. The parking controller is coupled to a plurality of energy delivery points within a parking area and a database for storing information. The parking controller is programmed to enable access to the parking area for an electric vehicle, enable an energy delivery point to provide energy to the electric vehicle while parked in the parking area, and determine a transaction cost.

### BRIEF DESCRIPTION OF THE DRAWINGS

There follows a detailed description of embodiments of the invention by way of example only with reference to the accompanying drawings, in which:
Figure 1 is a block diagram of an exemplary system for providing electricity to an electric vehicle;
Figure 2 is an expanded block diagram of an exemplary embodiment of a system architecture of the system shown in Figure 1; and
Figure 3 is a flowchart illustrating an exemplary method for delivering energy to electric vehicle within a parking garage using the system shown in Figures 1 and 2.

### DETAILED DESCRIPTION OF THE INVENTION

In some embodiments, the term "electric vehicle" refers generally to a vehicle that includes one or more electric motors that are used for propulsion. Energy used to propel electric vehicles may come from various sources, such as, but not limited to, an on-board rechargeable battery and/or an on-board fuel cell. In one embodiment, the electric vehicle is a hybrid electric vehicle, which captures and stores energy generated by braking. Moreover, a hybrid electric vehicle uses energy stored in an electrical source, such as a battery, to continue operating when idling to conserve fuel. Some hybrid electric vehicles are capable of recharging the battery by plugging into a power receptacle, such as a general power outlet. Accordingly, the term "electric vehicle" as used herein may refer to a hybrid electric vehicle or any other vehicle to which electrical energy may be delivered, for example, via the power grid.

In some embodiments, the term "parking area" refers generally to an area that includes a number of parking spaces. The parking spaces may be covered by, for example, a canopy, located within a parking garage, or located outside and uncovered.

Moreover, parking spaces within such a parking area may be designated as energy delivery parking spaces and located within a proximity of an energy delivery point, or may be designated as non-delivery points. Accordingly, the term "parking area" as used herein may refer to a parking garage, an outdoor parking lot, or any suitable area in which to park a vehicle, such as an electric vehicle.

A controller, computing device, or computer, such as described herein, includes at least one or more processors or processing units and a system memory. The controller typically also includes at least some form of computer readable media. By way of example and not limitation, computer readable media may include computer storage media and communication media. Computer storage media may include volatile and nonvolatile, removable and non-removable media implemented in any method or technology that enables storage of information, such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art should be familiar with the modulated data signal, which has one or more of its characteristics set or changed in such a manner as to encode information in the signal. Combinations of any of the above are also included within the scope of computer readable media.

Although described in connection with an exemplary parking and/or metering system environment, embodiments of the invention are operational with numerous other general purpose or special purpose computing system environments or configurations. The system environment is not intended to suggest any limitation as to the scope of use or functionality of any aspect of the invention. Moreover, the system environment should not be interpreted as having any dependency or requirement relating to any one or combination of components illustrated in the exemplary operating environment. Examples of well known systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program modules, executed by one or more controllers, computers, or other devices. Aspects of the invention may be implemented with any number and organization of components or modules. For example, aspects of the invention are not limited to the specific computer-executable instructions or the specific components or modules illustrated in the figures and described herein. Alternative embodiments of the invention may include different computer-executable instructions or components having more or less functionality than illustrated and described herein.

The order of execution or performance of the operations in the embodiments of the invention illustrated and described herein is not essential, unless otherwise specified. That is, the operations described herein may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

In some embodiments, a processor, as described herein, includes any programmable system including systems and microcontrollers, reduced instruction set circuits (RISC), application specific integrated circuits (ASIC), programmable logic circuits (PLC), and any other circuit or processor capable of executing the functions described herein. The above examples are exemplary only, and thus are not intended to limit in any way the definition and/or meaning of the term processor.

In some embodiments, a database includes any collection of data including hierarchical databases, relational databases, flat file databases, object-relational databases, object oriented databases, and any other structured collection of records or data that is stored in a computer system. The above examples are exemplary only, and thus are not intended to limit in any way the definition and/or meaning of the term database. Examples of databases include, but are not limited to only including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

A technical effect of the methods, systems, and computers described herein includes at least one of (a) permitting access to a parking area that includes an energy delivery point by identifying an electric vehicle; (b) determining an account associated with the electric vehicle, and an account balance of the account; (c) coupling the electric vehicle to the energy delivery point; (d) delivering energy to the electric vehicle; (e) determining a parking cost; (f) determining an energy cost; (g) determining a transaction cost based at least partially on the parking cost and/or the energy cost; and (h) deducting the transaction cost from the account.

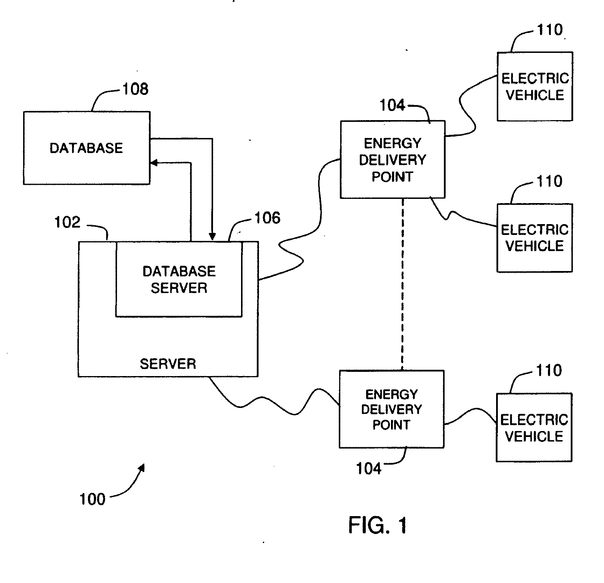

Figure 1 is a simplified block diagram of an exemplary system 100 for providing electricity to an electric vehicle 110. In the exemplary embodiment, system 100 includes a server system 102 and an energy delivery point 104 that is coupled to server system 102. As shown in Figure 1, server system 102 may be coupled to a plurality of delivery points 104. In one embodiment, delivery points 104 include a network link (not shown in Figure 1) that enables each delivery point 104 to access server system 102 over a network, such as the Internet and/or an intranet. Delivery points 104 are interconnected to the Internet through many interfaces including a network, such as a local area network (LAN), a wide area network (WAN), dial-in-connections, cable modems, wireless modems, and/or special high-speed Integrated Services Digital Network (ISDN) lines. A database server 106 is connected to a database 108 containing information on a variety of matters, such as account information related to electric vehicle energy distribution. In one embodiment, centralized database 108 is stored on server system 102 and is accessed directly via at least one delivery point 104. In an alternative embodiment, database 108 is stored remotely from server system 102 and may be non-centralized.

Moreover, in the exemplary embodiment, each delivery point 104 is capable of providing energy, such as electrical energy, to one or more electric vehicles 110. Each electric vehicle 110 stores the energy therein and uses the stored energy for propulsion, rather than, or in addition to, more conventional energy sources, such as gasoline. In the exemplary embodiment, each energy delivery point 104 is located within a parking area, such as a parking garage or a parking lot, to facilitate delivering energy to electric vehicle 110 during a parking session. In an alternative embodiment, one or more energy delivery points 104 are located within a parking garage and associated with designated energy delivery parking spaces. A number of energy delivery points 104 may also be located outside the parking garage. As such, use of energy delivery points 104 that are associated with designated energy delivery parking spaces within the parking area may include a surcharge and/or a different rate for each unit of energy delivered. In one embodiment, server system 102 is also located within a parking area. In an alternative embodiment, server system 102 is located remote from the parking area.

As described in more detail below, each electric vehicle 110 includes a unique identifier that is used by delivery point 104 and/or server 102 to identify that electric vehicle 110 and/or an account associated with electric vehicle 110. For example, database 108 may include transactional and/or accounting data related to prepayment information associated with an amount of energy that has been paid for in advance for later distribution to electric vehicle 110. Moreover, database 108 may include historical energy distribution data, such as transaction dates, and/or an amount of energy delivered to electric vehicle 110 for each transaction. Further, database 108 may include historical payment information, such as prepayment dates and/or prepayment amounts.

The embodiments illustrated and described herein, as well as embodiments not specifically described herein, but within the scope of aspects of the invention constitute exemplary means for providing metering for an electric vehicle, and more particularly, exemplary means for providing energy distribution and metering for an electric vehicle while parked in a parking area. For example, server system 102 or delivery point 104, or any other similar computer device that is programmed with computer-executable instructions as illustrated in Figure 1, provides exemplary means for providing energy distribution and metering for an electric vehicle while parked in a parking area.

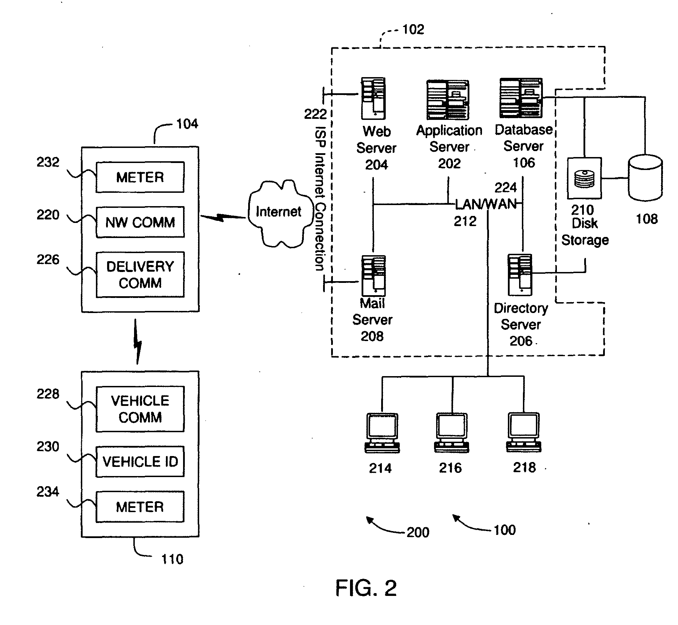

Figure 2 is an expanded block diagram of an exemplary embodiment of a system architecture 200 of system 100 (shown in Figure 1). Components in system architecture 200, identical to components of system 100, are identified in Figure 2 using the same reference numerals used in Figure 1. In the exemplary embodiment, system 200 includes server system 102 and energy delivery points 104. Server system 102 also includes database server 106, an application server 202, a web server 204, a directory server 206, and a mail server 208. A disk storage unit 210 is coupled to database server 106 and directory server 206. Examples of disk storage unit 210 may include, but are not limited to only including, a Network Attached Storage (NAS) device and a Storage Area Network (SAN) device.

In the exemplary embodiment, database server 106 is also coupled to database 108. Servers 106, 202, 204, 206, 206, and 208 are coupled in a local area network (LAN) 212. Moreover, a system administrator workstation 214, a user workstation 216, and a supervisor workstation 218 may be coupled to LAN 212 to enable communication with server system 102. Alternatively, workstations 214, 216, and 218 may be coupled to LAN 212 using an Internet link or may be coupled through an intranet. In one embodiment, an owner or user of electric vehicle 110 may access server system 202 via web server 204 to access, for example, the user's account and/or a payment service that enables the user to pay for energy that have been delivered to electric vehicle 110 or will be delivered to electric vehicle 110 and/or parking services relating to electric vehicle 110. For example, the user may use such a payment service to pay a monthly parking fee. Moreover, in one embodiment, mail server 208 may be configured to send a message, such as an email message, to the user when the user's account balance falls below a predetermined threshold. Alternatively, a user may setup a periodic reminder, wherein mail server 208 transmits a message to the user at a configurable periodic rate or when the account balance reaches a predetermined threshold value as a reminder to prepay for energy to be delivered later to electric vehicle 110 or a periodic parking fee.

Each energy delivery point 104 includes a network communication module 220 that communicates with server system 102. For example, server system 102 is configured to be communicatively coupled to energy delivery points 104 to enable server system 102 to be accessed using an Internet connection 222 provided by an Internet Service Provider (ISP). The communication in the exemplary embodiment is illustrated as being performed using the Internet, however, any suitable wide area network (WAN) type communication can be utilized in alternative embodiments. More specifically, the systems and processes are not limited to being practiced using only the Internet. In addition, local area network 212 may be used, rather than WAN 224. Each energy delivery point 104 also includes a delivery point communication module 226 that enables energy delivery point 104 to communicate with one or more electric vehicles 110. In addition, local area network 212 may be used rather than WAN 224.

Moreover, in the exemplary embodiment, energy delivery points 104 are electrically and/or communicatively coupled to one or more electric vehicles 110. Each electric vehicle 110 includes a vehicle communication module 228 that enables electric vehicle 110 to communicate with energy delivery point 104. More specifically, vehicle communication module 228 enables electric vehicle 110 to acquire energy from energy delivery point 104 via delivery point communication module 226.

To facilitate communication between electric vehicle 110 and server system 102 via energy delivery point 104, electric vehicle 110 includes a unique vehicle identifier 230 that is embedded within electric vehicle 110. Identifier 230 may be implemented as, for example, a radio frequency identification (RFID) chip. Alternatively, identifier 230 may be implemented as a tag that is embedded in any communication sent to energy delivery point 104 from electric vehicle 110 or from energy delivery point 104 to electric vehicle 110. For example, identifier 230 may be included in any wireless communication packets that are transmitted between vehicle communication module 228 and delivery point communication module 226. As another example, identifier 230 may be included in any communication packets that are transmitted between vehicle communication module 228 and delivery point communication module 226 via physical connection. Moreover, identifier 230 may be implemented using a bar code that is read by a bar code reader (not shown) that is coupled to energy delivery point 104. Furthermore, identifier 230 may be implemented using a two-dimensional bar code that is read by a compatible bar code reader that is coupled to energy delivery point 104. In some embodiments, identifier 230 is a passive tag that does not broadcast information embedded within the identifier 230 but, rather, is read or scanned by a reader or scanner that is coupled to energy delivery point 104.

In the exemplary embodiment, identifier 230 is linked in database 108 to an account associated with electric vehicle 110, in which an account balance is maintained including payments that have been made to the account by the account owner. Alternatively, identifier 230 may be linked to an account that is associated with a person, such that an account balance allocated among one or more electric vehicles 110. Further, in the exemplary embodiment, each energy delivery point 104 includes an energy meter 232 that tracks an amount of energy delivered to electric vehicle 110. Moreover, electric vehicle 104 includes an energy meter 234 that tracks an amount of energy received by electric vehicle 110.

During use, a customer directs electric vehicle 110 into a parking area that includes energy delivery point 104. In the exemplary embodiment, when the customer wishes to charge electric vehicle 110 via energy delivery point 104, and after electric vehicle 110 is coupled to energy delivery point 104, electric vehicle 110 is recognized by energy delivery point 104 according to identifier 230. More specifically, in one embodiment, energy delivery point 104 reads identifier 230 using, for example, an RFID reader, where identifier 230 is an RFID chip. Alternatively, energy delivery point 104 and electric vehicle 110 may be communicatively coupled by an active wireless connection, and identifier 230 may be transmitted by vehicle communication module 228 to delivery point communication module 226 using the wireless connection. In another example, energy delivery point 104 and electric vehicle 110 may be communicatively coupled by a physical communication connection, and identifier 230 may be transmitted by vehicle communication module 228 to delivery point communication module 226 using the physical connection.

In the exemplary embodiment, energy delivery point 104 transmits identifier 230 to server system 102 to determine an account associated with identifier 230. In an alternative embodiment, electric vehicle 110 may be permitted entrance into the parking area after the customer inputs a code and/or an account number into a terminal positioned at an entrance to the parking area. Based on the code and/or account number, server system 102 may permit access to the parking area. In another alternative embodiment, delivery point communication module 226 may be positioned remote from energy delivery point 104, such as at an entrance to the parking area. In such an embodiment, identifier 230 may be transmitted by electric vehicle 110 and/or received by delivery point communication module 226 and transmitted to server system 102 in order to qualify electric vehicle 110 for access to the parking area. In another alternative embodiment, the customer may withdrawal a card from a terminal located at an entrance of the parking area. In some embodiments, the customer may then insert the card into energy delivery point 104 in order to request that a parking cost and an energy cost be combined into a total transaction cost.

In the exemplary embodiment, once server system 102 has identified an account associated with identifier 230, server system 102 determines an account balance. If the account balance meets a predetermined threshold, server system 102 instructs energy delivery point 104 to enable service to electric vehicle 110. If the account balance does not meet a predetermined threshold, server system 102 may instruct energy delivery point 104 to deny service to electric vehicle 110 and display a message to the customer stating the reason for the denial. In such a case, server system 102 may issue a temporary credit to the account balance. In one embodiment, energy delivery point 104 meters energy delivery to electric vehicle using a different rate, such as a higher rate, when a temporary credit is issued. In an alternative embodiment, server system 102 may instruct energy delivery point 104 to deny service to electric vehicle 110 when the account associated with identifier 230 has been put into a hold state. A hold state may be placed on the account based on, for example, a delinquent payment by the customer and/or a report of electric vehicle 110 being stolen.

In the exemplary embodiment, when service to electric vehicle 110 is enabled, energy delivery point 104 will deliver an amount of energy to electric vehicle 110. During the delivery, both energy delivery point 104 and electric vehicle 110 meter the amount of energy delivered and/or a transaction amount related to the amount of energy delivered, via delivery point meter 232 and vehicle meter 234, respectively. A final transaction amount is determined at the conclusion of the energy delivery, and the final transaction amount is transmitted to server system 102. In one exemplary embodiment, the final transaction amount includes both a parking cost and an energy cost. The parking cost may be based on, for example, a duration of use of the parking space by electric vehicle 110. Moreover, the parking cost may be based on use, by electric vehicle 110, of a parking space designated for energy distribution, wherein such a designated space has a parking rate that is, for example, higher than a parking rate of a parking space that is not designated for energy distribution and/or is not located in proximity to energy delivery point 104. The energy cost may be based on, for example, an energy rate that depends on a location of the parking space used. For example, an energy cost may be higher for a parking space that is within a parking garage than for a parking space that is located outside the parking garage.

Server system 102 then deducts the final transaction amount from the account balance. If the final transaction amount is greater than the account balance, server system 102 may issue a temporary credit using a different rate, such as a higher rate, as described above. In addition, in one embodiment, upon the conclusion of energy delivery, delivery point meter 232 and vehicle meter 234 compare the amount of energy delivered and/or the final transaction amount. If the comparison results in a match, then vehicle meter 234 generates a receipt. In one embodiment, the receipt is stored in vehicle meter 234. In another embodiment, the receipt is also transmitted to energy delivery point 104 for storage in server system 102.

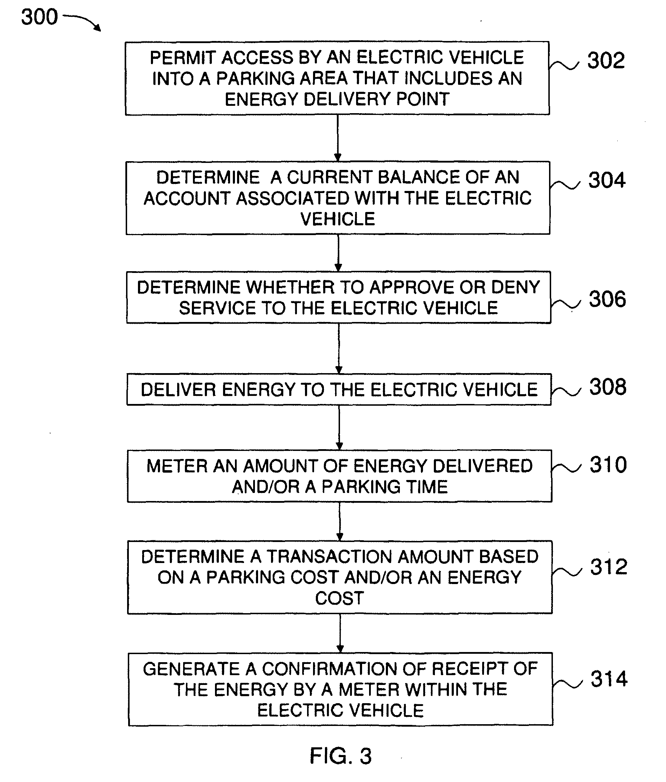

Figure 3 is a flowchart 300 illustrating an exemplary method for delivering energy to electric vehicle 110 (shown in Figures 1 and 2) within a parking area. In the exemplary embodiment, electric vehicle 110 is permitted 302 access to a parking area that includes one or more energy delivery points 104 (shown in Figures 1 and 2). More specifically, in one embodiment, upon entering the parking area and being coupled to energy delivery point 104, electric vehicle 110 is identified at energy delivery point 104 according to a unique identifier 230 (shown in Figures 1 and 2) embedded in electric vehicle 110. In addition, a parking space associated with energy delivery point 104 is designated by server system 102 (shown in Figures 1 and 2) as occupied.

In the exemplary embodiment, server system 102 and/or energy delivery point 104 tracks an amount of time that electric vehicle 110 occupies the parking space in order to determine a parking cost. In an alternative embodiment, electric vehicle 110 is identified upon entrance to the parking area. In another alternative embodiment, a customer obtains a card from a terminal located at an entrance to the parking area, and inserts the card into energy delivery point 104 in order to generate a transaction cost that includes both a parking cost and an energy cost. In one embodiment, identifier 230 is stored in an RFID tag and energy delivery point 104 includes an RFID reader configured to read identifier 230. In an alternative embodiment, energy delivery point 104 receives identifier 230 via an actively powered wireless link. In another alternative embodiment, energy delivery point 104 receives identifier 230 via a physical connection between electric vehicle 110 and energy delivery point 104. In the exemplary embodiment, electric vehicle 110 and, more specifically, identifier 230 is associated with a customer account.

When identifier 230 has been read, a current balance of the customer account associated with identifier 230 is determined 304. More specifically, energy delivery point 104 transmits identifier 230 to server system 102 using, for example, the Internet and/or an intranet. Server system 102 determines the user account associated with identifier 230 within database 108 (shown in Figures 1 and 2). Server system 102 then determines the current account balance. In one embodiment, server system 102 then determines 306 whether to approve or deny energy delivery from energy delivery point 104 to electric vehicle 110. For example, if the current account balance is less than a threshold amount, the customer is denied service at energy delivery point 104. In such an embodiment, the customer may also be prompted to insert a credit card or cash into a payment acceptance device within energy delivery point 104. In another example, service may be denied by server system 102 if a stolen car report is associated with electric vehicle 110. In the exemplary embodiment, the current account balance may be increased by the account owner remotely using, for example, user workstation 216 (shown in Figure 2). For example, the customer may login to server system 202 via user workstation 216 in order to access a payment program that enables the customer to designate a payment amount to be applied to the account balance. The customer may also designate a payment source including, but not limited to only including, a credit card, a debit card, and/or a banking account. The prepayment amount is then credited to the account balance. In one embodiment, the customer may choose to preauthorize, prior to the delivery of energy to electric vehicle 110, payment of the transaction cost using a payment means other than the account associated with identifier 230, such using a credit card or a debit card.

In the exemplary embodiment, energy is then delivered 308 to electric vehicle 110 via energy delivery point 104. Delivery point meter 232 (shown in Figure 2) meters 310 the amount of energy delivered and a transaction amount is determined 312 based on the metered amount of energy delivered according to delivery point meter 232. In one embodiment, energy delivery point 104 determines a transaction amount based on the amount of energy delivered and transmits the transaction amount to server system 102. In an alternative embodiment, energy delivery point 104 transmits the amount of energy delivered to server system 102, and server system 102 determines the transaction amount based on the amount of energy delivered. The transaction amount is determined based on an energy cost that is based on an actual amount of energy delivered to electric vehicle 110 at energy delivery point 104, and a parking cost. The parking cost may be based on an amount of time electric vehicle 110 is parked in the parking space and/or on a type of parking space occupied by electric vehicle 110. For example, a parking cost associated with a parking space located within a parking garage and associated with a first energy delivery point 104 may be greater than a parking cost associated with a parking space located outside of the parking garage and associated with a second energy delivery point 104.

In the exemplary embodiment, the transaction amount is then compared to the current balance in the customer account. If the transaction amount is less than the current balance, the transaction amount is deducted from the current balance. The new balance is then stored in database 108. In one embodiment, the new balance is transmitted by server system 102 to energy delivery point 104 and is displayed to the customer. In an alternative embodiment, the new balance is also transmitted to electric vehicle 110 by energy delivery point 104 and displayed to the customer via vehicle meter 234 (shown in Figure 2). If the current balance is less than the transaction amount, the customer account may be credited with the difference between the transaction amount and the current balance and the customer billed for the difference at a later time. In such an embodiment, the billing rate may be changed for any energy distributed on credit. Alternatively, the customer may be prompted to submit payment at energy delivery point 104. For example, the customer may be prompted to insert a credit card into a payment acceptance device (not shown) within energy delivery point 104. In the exemplary embodiment, a confirmation of the receipt of the delivered energy is generated 314 by vehicle meter 234. The receipt may be used by the customer to verify an amount of energy delivered and/or a cost per unit energy. The receipt may be generated by electric vehicle 110 and stored in electric vehicle 110 and database 108. Alternatively, the receipt may be generated by server system 102, stored in database 108, and transmitted to electric vehicle 110 via energy delivery point 104. In addition, in one embodiment, an adjusted current balance may be displayed to the customer via energy delivery point 104 to reflect a deduction of the transaction amount from the account.

Described in detail herein are exemplary embodiments of methods, systems, and computers that facilitate metering electricity consumption for vehicles, such as electric vehicles, while parked in a parking area. Moreover, providing electric vehicle charging within a parking area facilitates enabling parking area owners to charge different rates for differently situated parking spaces, wherein a parking space that provides electric vehicle charging is associated with a rate that is different than a parking space that does not provide electric vehicle charging. Similarly, parking area owners that also provide outdoor parking spaces may charge one rate for a parking space located within an enclosed parking area, such as a parking garage, while providing electric vehicle charging, and a different rate for a parking space located outside the parking garage.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other assembly packages and methods.

While the invention has been described in terms of various specific embodiments, those skilled in the art will recognize that the invention can be practiced with modification within the scope of the claims.

## Claims

1. A system configured to deliver energy to an electric vehicle (110), said system comprising:
an energy delivery point (104) located within a parking area that includes a plurality of parking spaces, wherein said energy delivery point is configured to be coupled to the electric vehicle and to deliver energy to the electric vehicle; and
a server system (102) coupled to said energy delivery point, wherein said server system is configured to permit access by the electric vehicle to the parking area, and determine a transaction cost that includes a parking cost and an energy cost.

2. A system in accordance with Claim 1, wherein said server system (102) is configured to determine an identity of the electric vehicle (110) and to determine an account associated with the electric vehicle based on the identification.

3. A system in accordance with Claim 2, wherein said server system (102) is configured to determine a current balance of the account associated with the electric vehicle (110) and to compare the current balance with a minimum account balance.

4. A system in accordance with Claim 3, wherein said server system (102) is configured to permit the electric vehicle (110) to be coupled to said energy delivery point by preauthorizing payment of the transaction cost using a payment means other than the account associated with the electric vehicle.

5. A system in accordance with any of the preceding claims, wherein at least a portion of the plurality of parking spaces are designated for energy delivery, said server system (102) is configured to determine the parking cost based at least partially on use by the electric vehicle (110) of a parking space that is designated for energy delivery.

6. A system in accordance with Claim 5, wherein said energy delivery point comprises a plurality of energy delivery points (104) with at least a portion of said plurality of energy delivery points positioned with respect to the plurality of parking spaces designated for energy delivery, said server system (102) is configured to determine the energy cost based at least partially on a first energy cost associated with use of a first energy delivery point associated with a parking space that is designated for energy delivery, wherein the first energy cost is different than a second energy cost associated with use of a second energy delivery point that is located outside the parking area.

7. A parking controller coupled to a plurality of energy delivery points (104) within a parking area and a database (108) for storing information, said parking controller programmed to:
enable access to the parking area for an electric vehicle (110);
enable an energy delivery point to provide energy to the electric vehicle while parked in the parking area; and
determine a transaction cost.

8. A parking controller in accordance with Claim 7, wherein said parking controller is further configured to determine an identity of the electric vehicle (110) and to determine an account associated with the electric vehicle based on the identification using the database (108).

9. A parking controller in accordance with Claim 8, wherein said parking controller is further configured to determine a current balance of the account associated with the electric vehicle (110) and to compare the current balance with a minimum account balance.

10. A parking controller in accordance with Claim 9, wherein said parking controller is further configured to permit the electric vehicle (110) to be coupled to the energy delivery point (104) by preauthorizing payment of the transaction cost using a payment means other than the account associated with the electric vehicle.

11. A method for delivering energy to an electric vehicle, said method comprising:
permitting access to a parking area that includes an energy delivery point;
delivering energy to the electric vehicle from the energy delivery point; and
determining a transaction cost.

12. A method in accordance with Claim 11, wherein permitting access comprises identifying the electric vehicle and determining an account associated with the electric vehicle.

13. A method in accordance with Claim 12, wherein permitting access further comprises determining a current balance of the account.

14. A method in accordance with Claim 13, wherein permitting access further comprises permitting the electric vehicle to be coupled to the energy delivery point based on a comparison between the current balance and a minimum account balance.

15. A method in accordance with Claim 14, wherein permitting the electric vehicle to be coupled to the energy delivery point comprises preauthorizing payment of the transaction cost using a payment means other than the account associated with the electric vehicle.
